# EUROPEAN PATENT APPLICATION

(11) **EP 4 723 360 A2**
(43) Date of publication of application: **08.04.2026**
(21) Application number: 26151009.3
(22) Date of filing: 06.11.2023
(51) Int. Cl.: H01M 50/569

(54) **BATTERY MODULE AND BATTERY PACK**

(30) Priority: 18.05.2023 CN 202310573602
(62) Divisional of application: 23208058.0
(71) Applicant: Jinko Energy Storage Technology Co., Ltd., Haining, Zhejiang 314415 (CN)
(72) Inventor: LI, Wei, HAINING, 314415 (CN)
(74) Representative: DREISS Patentanwälte PartG mbB

(57) **Abstract**

A battery module includes a cell assembly, a collection assembly, a first heat insulating member, and a heat insulation cushion assembly. The cell assembly includes a plurality of cells arranged along a length direction of the battery module. The collection assembly is located on a side of the cell assembly along a height direction of the battery module, and is connected to the cell assembly. The first heat insulating member is located on a side of the collection assembly away from the cell assembly along the height direction of the battery module, and is connected to the collection assembly. The heat insulation cushion assembly is located between two adjacent cells, and includes a second heat insulating member and two cushion members. Each cushion member has one side connected to the second heat insulating member and the other side connected to the corresponding cell.

## Description

### TECHNICAL FIELD

The present disclosure relates to the technical field of batteries, and in particular, to a battery module and a battery pack.

### BACKGROUND

There is a risk of thermal runaway during operation of a battery module. The thermal runaway may reduce safety of the battery module and affect performance of other aspects of the battery module. Protection measures against the thermal runaway in the existing battery module are insufficient. As a result, heat generated by thermal runaway of a cell spreads inside the battery module, thereby affecting operational performance of other cells and the entire battery module.

### SUMMARY

The present disclosure provides a battery module and a battery pack.

According to an aspect, a battery module is provided. The battery module includes a cell assembly, a collection assembly, a first heat insulating member, and a heat insulation cushion assembly. The cell assembly includes a plurality of cells arranged along a length direction of the battery module. The collection assembly is located on a side of the cell assembly along a height direction of the battery module, and is connected to the cell assembly. The first heat insulating member is located on a side of the collection assembly away from the cell assembly along the height direction of the battery module, and is connected to the collection assembly. The heat insulation cushion assembly is located between two adjacent cells. The heat insulation cushion assembly includes a second heat insulating member and two cushion members. The two cushion members are located on two sides of the second heat insulating member along the length direction of the battery module, and each of the cushion members has one side connected to the second heat insulating member and the other side connected to the corresponding cell.

In some embodiments, each of the two cushion members includes two first body portions extending along the height direction of the battery module and two second body portions extending along a width direction of the battery module, and the two first body portions and the two second body portions are connected to form a frame structure.

In some embodiments, an end of each of the plurality of cells adjacent to the collection assembly is provided with an explosion-proof port, the collection assembly includes a body portion, the body portion is provided with a plurality of avoidance holes arranged along the length direction of the battery module, the plurality of avoidance holes are in one-to-one correspondence to the explosion-proof ports of the plurality of cells, and each of the avoidance holes is communicated with the explosion-proof port corresponding thereto.

In some embodiments, the first heat insulating member includes a plurality of grooves arranged along the length direction of the battery module, and the plurality of grooves penetrate along the height direction of the battery module and are in one-to-one correspondence to the plurality of avoidance holes.

In some embodiments, a dimension D1 of a bottom wall of one of the grooves along the height direction of the battery module satisfies 0.1 mm≤D1≤0.2 mm.

In some embodiments, a dimension D2 of the first heat insulating member along the height direction of the battery module satisfies 0.4 mm≤D2≤1 mm.

In some embodiments, a dimension D3 of the second heat insulating member along the length direction of the battery module satisfies 0.5 mm≤D3≤1 mm.

In some embodiments, a dimension D4 of one of the cushion members along the length direction of the battery module satisfies 0.5 mm≤D4≤1 mm.

In some embodiments, the first heat insulating member and/or the second heat insulating member is made of mica.

In some embodiments, the collection assembly is a Cells Contact System assembly.

In some embodiments, an end of each of the plurality of cells adjacent to the collection assembly is provided with an explosion-proof port, the collection assembly includes a body portion provided with a plurality of avoidance holes, and the first heat insulating member includes a plurality of grooves penetrating into but not penetrating through the first heat insulating member, wherein the plurality of avoidance holes are in one-to-one correspondence to the explosion-proof ports of the plurality of cells, and in one-to-one correspondence to the plurality of grooves, and wherein each groove is right above the corresponding avoidance hole that is right above and communicated with corresponding explosion-proof port.

In some embodiments, electrolyte of a thermal-runaway cell of the plurality of cells flows through its explosion-proof port and the corresponding avoidance hole of the collection assembly, and then breaks through a bottom wall of the corresponding groove of the first heat insulating member.

In some embodiments, the battery module further includes two end plates. The plurality of cells are electrically connected in series, and side surfaces of the plurality of cells are fixed to one or more steel strips. The plurality of cells are arranged between the two end plates, and each of the one or more steel strips includes two ends fixed to the two end plates respectively.

According to another aspect, a battery pack is provided. The battery pack includes a housing and at least one battery module. An accommodation space is formed in the housing, and the battery module is located in the accommodation space. The battery module includes a cell assembly, a collection assembly, a first heat insulating member, and a heat insulation cushion assembly. The cell assembly includes a plurality of cells arranged along a length direction of the battery module. The collection assembly is located on a side of the cell assembly along a height direction of the battery module, and is connected to the cell assembly. The first heat insulating member is located on a side of the collection assembly away from the cell assembly along the height direction of the battery module, and is connected to the collection assembly. The heat insulation cushion assembly is located between two adjacent cells. The heat insulation cushion assembly includes a second heat insulating member and two cushion members. The two cushion members are located on two sides of the second heat insulating member along the length direction of the battery module, and each of the cushion members has one side connected to the second heat insulating member and the other side connected to the corresponding cell.

### BRIEF DESCRIPTION OF DRAWINGS

FIG. 1 is a schematic diagram of a battery module according to the present disclosure;
FIG. 2 is an enlarged view of a region I in FIG. 1; and
FIG. 3 is an exploded view of a heat insulation cushion assembly of the battery module according to the present disclosure.

Reference signs:
1: battery module;
   11: cell assembly;
      111: cell;
         111a: explosion-proof port;
      112: end plate;
      113: steel strip;
   12: collection assembly;
      121: body portion;
         121a: avoidance hole;
      122: aluminum bar;
   13: first heat insulating member;
      131: groove;
   14: heat insulation cushion assembly;
      141: second heat insulating member;
      142: cushion member;
         142a: first body portion;
         142b: second body portion;
   15: fastener.

The accompanying drawings herein, which are incorporated in and constitute a part of this specification, illustrate embodiments consistent with the present disclosure and, together with the specification, serve to explain principles of the present disclosure.

### DESCRIPTION OF EMBODIMENTS

In order to better understand the technical solutions of the present disclosure, embodiments of the present disclosure will be described in detail below in conjunction with the accompanying drawings.

It should be clear that the described embodiments are only some rather than all of the embodiments of the present disclosure Based on the embodiments in the present disclosure, all other embodiments obtained by those of ordinary skill in the art without creative efforts fall within the protection scope of the present disclosure.

Terms used in the embodiments of the present disclosure are only for the purpose of describing specific embodiments, and are not intended to limit the present disclosure. Singular forms of "a/an", "the", and "said" used in the embodiments of the present disclosure and the appended claims are intended to include plural forms, unless otherwise clearly specified in the context.

It should be understood that the term "and/or" used herein describes an association relationship between associated objects and represents that three relationships may exist. For example, A and/or B may represent the following three cases: only A exists, both A and B exist, and only B exists. In addition, the character "/" herein generally indicates an "or" relationship between the associated objects.

It is to be noted that orientation terms such as "up", "down", "left", and "right" described in the embodiments of the present disclosure are described from the perspective shown in the accompanying drawings, and should not be construed as limiting the embodiments of the present disclosure. Besides, in this context, it is to be further understood that one element described as being connected "on" or "under" another element not only means that the element may be directly connected "on" or "under" the another element, but also means that the element may be indirectly connected "on" or "under" the another element through an intermediate element.

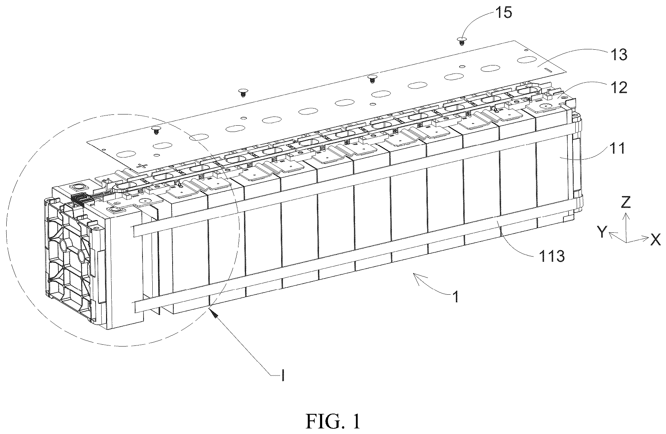

As shown in FIG. 1 to FIG. 3, embodiments of the present disclosure provide a battery module 1, including a cell assembly 11, a collection assembly 12, a first heat insulating member 13, and a heat insulation cushion assembly 14. The cell assembly 11 includes a plurality of cells 111 arranged along a first direction X of the battery module 1. The first direction X is the length direction X of the battery module 1. The collection assembly 12 is located on a side of the cell assembly 11 along a second direction Z of the battery module 1, and is connected to the cell assembly 11. The second direction Z is the height direction Z of the battery module 1. The first heat insulating member 13 is located on a side of the collection assembly 12 away from the cell assembly 11 along the height direction Z of the battery module 1, and is connected to the collection assembly 12. The heat insulation cushion assembly 14 is located between two adjacent cells 111. The battery module 1 may include a plurality of heat insulation cushion assemblies 14, and every two adjacent cells 111 are separated by one heat insulation cushion assembly 14. The heat insulation cushion assembly 14 includes a second heat insulating member 141 and two cushion members 142. The two cushion members 142 are located on two sides of the second heat insulating member 141 along the length direction X of the battery module 1, and each of the cushion members 142 has a first side connected to the second heat insulating member 141 and a second side connected to the corresponding cell 111.

In the cell assembly 11, the plurality of cells 111 are connected in series and fixed by end plates 112 and steel strips 113. The collection assembly 12 is a Cells Contact System (CCS) assembly. The collection assembly 12 is configured to collect data such as temperatures and voltages of the cells 111, so as to monitor states of the cells 111. The collection assembly 12 includes aluminum bars 122. The aluminum bar 122 may be connecting to a pole of the cell 111 for example by welding to the pole of the cell 1, thereby realizing a fixed connection between the collection assembly 12 and the cell assembly 11. The first heat insulating member 13 is fixedly connected to the collection assembly 12 through a plurality of fasteners 15. The first heat insulating member 13 has functions of heat insulation and isolation, so as to reduce a possibility of heat exchange between the cell assembly 11 and the outside. When thermal runaway occurs in a single cell 111, a high-temperature electrolyte inside the cell 111 may be released through the explosion-proof port 111a, and the released electrolyte may break through the first heat insulating member 13 and reach a surface of the first heat insulating member 13 away from the cell assembly 11. In this case, the first heat insulating member 13 plays a role of isolation between the cell assembly 11 and the electrolyte, thereby reducing a possibility that the high-temperature electrolyte moves to other cells 111 causes thermal runaway of the other cells 111. The heat insulation cushion assembly 14 is arranged between two adjacent cells 111. The cushion members 142 on two sides of the second heat insulating member 141 may be bonded with the second heat insulating member 141 by gel such as glue or a double-sided tape. In some embodiments, the cushion members 142 may be bonded with the corresponding cells 111 by gel. The second heat insulating member 141 plays a role of heat insulation between two cells 111, reducing heat exchange between the two cells 111. The cushion member 142 may absorb deformation of the expanded cell 111, thereby reducing a possibility of large stress between the cells 111.

The conventional battery module has insufficient protection measures against the thermal runaway of the cell. Firstly, there is no heat insulation measures between adjacent cells, resulting in poor heat insulation between the cells, and heat is easy to spread between the cells. Secondly, there is no heat insulation and isolation measures on the top of the cell assembly. Therefore, in the conventional battery module, if thermal runaway occurs in a single cell, heat of the cell may spread rapidly, leading to a rapid rise in temperature of surrounding cells, and a high-temperature electrolyte leakage from the cell is easy to move to other cells, leading to a further rise in temperatures of other cells, so that thermal runaway also occurs in other cells. That is, heat generated by the cell in which thermal runaway occurs spreads inside the battery module, thereby triggering a chain reaction of thermal runaway, which may affect the service life and operational performance of the battery module.

Compared with the conventional battery module, in the battery module 1 provided in embodiments of the present disclosure, the heat insulation cushion assembly 14 is arranged between adjacent cells 111. The cushion member 142 may absorb deformation of the expanded cell 111, reducing a possibility of damages to the cells 111 caused by mutual extrusion between the cells 111 after the cells 111 expand, and improving operational reliability and stability of the cell 111. The second heat insulating member 141 may play an effective heat insulation role between the adjacent cells 111, which improves heat insulation performance between the cells 111, thereby reducing heat transfer between the cells 111. At the same time, the first heat insulating member 13 is arranged on the top of the cell assembly 11. The first heat insulating member 13 may isolate and protect the cell assembly 11, preventing the electrolyte from the cell 111 where thermal runaway occurs from affecting other cells 111, thereby reducing the influence of the cell 111 where thermal runaway occurs on other cells 111. At the same time, the first heat insulating member 13 provides heat insulation for the cell assembly 11, reducing a possibility of diffusion of heat of the high-temperature electrolyte to the cells 111. To sum up, in some embodiments of the present disclosure, thermal runaway protection measures are taken between adjacent cells 111 and on the top of the cell assembly 11, which reduces a spread possibility of heat generated by the thermal-runaway cell 111inside the battery module 1, thereby reducing a possibility of a chain reaction of thermal runaway among the plurality of cells 111 and further improving the operational performance and prolong the service life of the battery module 1.

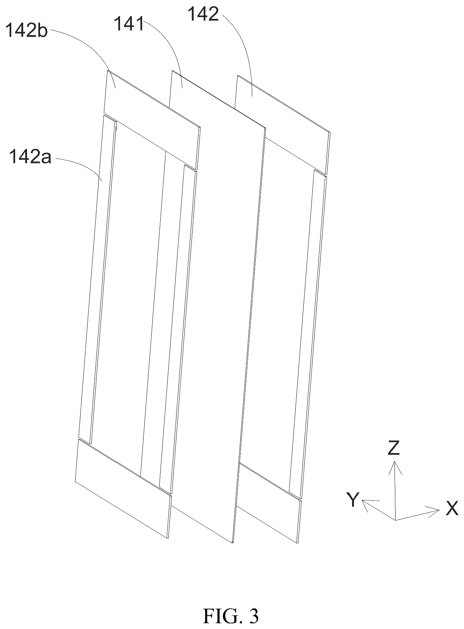

As shown in FIG. 3, in some embodiments, the cushion member 142 includes two first body portions 142a extending along the height direction Z of the battery module 1 and two second body portions 142b extending along a width direction Y of the battery module 1, and the two first body portions 142a and the two second body portions 142b are connected to form a frame structure.

For example, the cushion member 142 may be made of foam or other materials with a cushioning and shock-absorbing effect. The first body portion 142a and the second body portion 142b may be strip-shaped, and the two first body portions 142a and the two second body portions 142b are connected to define a hollowed rectangle structure, for example, a rectangular ring structure. As shown in FIG. 3, the two first body portions 142a and the two second body portions 142b define a □ shape. The two first body portions 142a are parallel to each other, and the two second body portions 142b are parallel to each other.

In this way, the cushion member 142 can absorb deformation generated around the cell 111, thereby improving a cushioning effect of the cushion member 142, reducing a possibility of mutual extrusion between adjacent cells 111, further prolonging the service life of the cells 111, and improving operational reliability and stability of the cells 111.

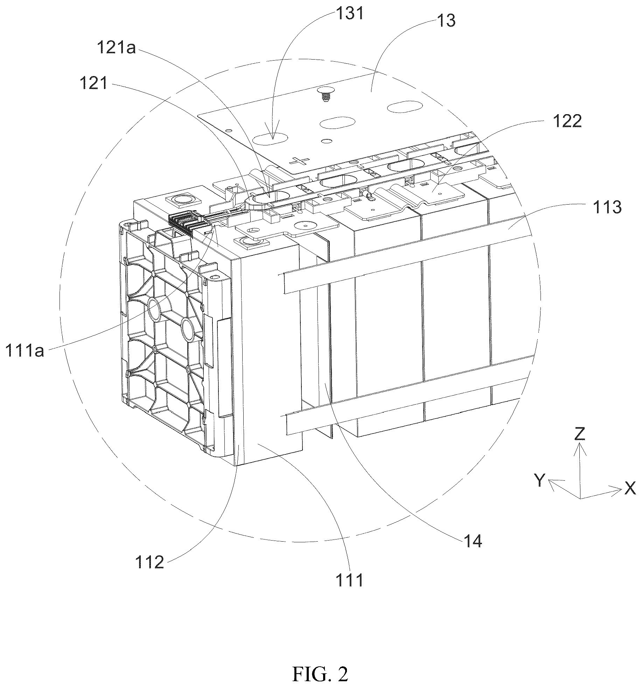

As shown in FIG. 2, in some embodiments, an end of each cell 111 close to the collection assembly 12 is provided with an explosion-proof port 111a, the collection assembly 12 includes a body portion 121, the body portion 121 is provided with a plurality of avoidance holes 121a arranged along the length direction X of the battery module 1, the plurality of avoidance holes 121a are in one-to-one correspondence to the explosion-proof ports 111a of the plurality of cells 111, and each of the avoidance holes 121a is communicated with the explosion-proof port 111a corresponding thereto.

The body portion 121 may be a wire harness separator of the collection assembly 12. The first heat insulating member may be fixed to the wire harness separator through a fastener 15. The avoidance holes 121a are provided along the height direction Z of the battery module 1, and each of the avoidance holes 121a corresponds to the explosion-proof port 111a of one cell 111. After thermal runaway occurs in a cell 111, pressure and the electrolyte inside the cell 111 are released through the explosion-proof port 111a. The electrolyte may be sprayed onto the first heat insulating member 13 through the avoidance hole 121a. The electrolyte may break through the first heat insulating member 13, and may move on the surface on the side of the first heat insulating member 13 away from the cell assembly 11.

The thermal-runaway cell 111 can release the internal pressure and the electrolyte through the arrangement of the avoidance holes 121a in the body portion 121, which reduces a possibility that the collection assembly 12 hinders the electrolyte released by the cell 111, and at the same time, reduces a possibility that the electrolyte may impact the collection assembly 12. At the same time, this design allows the electrolyte to smoothly break through the first heat insulating member 13 and fall on the surface of the first heat insulating member 13, thereby reducing a possibility that the electrolyte falls on other cells 111 and causes thermal runaway of the other cells 111.

As shown in FIG. 2, in some embodiments, the first heat insulating member 13 is provided with a plurality of grooves 131 arranged along the length direction X of the battery module 1, and the plurality of grooves 131 penetrate along the height direction Z of the battery module 1 and are in one-to-one correspondence to the plurality of avoidance holes 121a.

The first heat insulating member 13 is thinned at the grooves 131, and each groove 131 is arranged at a position corresponding to a position of one avoidance hole 121a. That is, each groove 131 corresponds to the explosion-proof port 111a of one cell 111. The electrolyte released by the thermal-runaway cell 111 can be collected in the corresponding groove 131 through the corresponding avoidance hole 121a. Since a thickness of a bottom wall of the groove 131 is small, the electrolyte can break through the bottom wall of the groove 131 and fall on the surface of the first heat insulating member 13.

The groove 131 is provided in the first heat insulating member 13 to realize the thinning design of the first heat insulating member 13 at the position corresponding to the explosion-proof port 111a of the cell 111, so that the electrolyte released by the cell 111 can break through the first heat insulating member 13, which realizes an isolation and protection effect of the first heat insulating member 13 on the cell 111 and reduces a possibility of an influence of the electrolyte on other cells 111.

In some embodiments, a dimension D1 of the bottom wall of the groove 131 along the height direction Z of the battery module 1 satisfies 0.1 mm≤D1≤0.2 mm.

A thickness of the thinned part of the first heat insulating member 13 may be 0.1 mm, 0.15 mm, 0.18 mm, or 0.2 mm, or other values within the above range, which is not limited in this embodiment.

The thickness of the bottom wall of the groove 131 is less than or equal to 0.2 mm. If the bottom wall of the groove 131 has an excessive thickness, the electrolyte cannot break through the first heat insulating member 13 and the electrolyte may spray onto other cells 111 due to an excessive thickness of the bottom wall of the groove 131, causing thermal runaway of other cells 111.

In some embodiments, a dimension D2 of the first heat insulating member 13 along the height direction Z of the battery module 1 satisfies 0.4 mm≤D2≤1 mm.

A thickness of the first heat insulating member 13 may be 0.4 mm, 0.5 mm, 0.6 mm, or 1 mm, or other values within the above range, which is not limited in this embodiment.

The thickness of the first heat insulating member 13 is configured within the above range, so that the first heat insulating member 13 can provide effective heat insulation and isolation protection, thereby reducing the risk that the thermal runaway of a single cell 111 cause the thermal runaway of the whole battery module. In addition, an excessive thickness of the first heat insulating member 13 is prevented, avoiding an excessively large volume of the entire battery module 1.

In some embodiments, a dimension D3 of the second heat insulating member 141 along the length direction X of the battery module 1 satisfies 0.5 mm≤D3≤1 mm.

The thickness of the second heat insulating member 141 may be designed within a range from 0.1 mm to 1.5 mm. Furthermore, in this embodiment, the thickness of the second heat insulating member 141 may be designed within a range from 0.5 mm to 1 mm, and the thickness of the second heat insulating member 141 may be 0.5 mm, 0.65 mm, 0.7 mm, 0.85 mm, or 1 mm.

The thickness of the second heat insulating member 141 is configured within the above range, which improves a heat insulation effect of the second heat insulating member 141 between adjacent cells 111 and reduces heat transfer between adjacent cells 111. In addition, a miniaturization design of the battery module 1 is realized, and an excessively large volume of the battery module 1 caused by an excessive thickness of the second heat insulating member 141 is avoided.

In some embodiments, a dimension D4 of the cushion member 142 along the length direction X of the battery module 1 satisfies 0.5 mm≤D4≤1 mm.

The thickness of the cushion member 142 may be designed within a range from 0.1 mm to 2 mm. Furthermore, in this embodiment, the thickness of the cushion member 142 may be designed within a range from 0.5 mm to 1 mm, and the thickness of the cushion member 142 may be 0.5 mm, 0.6 mm, 0.75 mm, 0.9 mm, or 1 mm.

The thickness of the cushion member 142 is configured within the above range, which improves a shock-absorbing and cushioning effect of the cushion member 142 on the cell 111, so that the cushion member 142 can effectively absorb strain generated by expansion of the cell 111, thereby improving operational reliability and stability of the cell 111, further realizing a miniaturization design of the battery module 1, and reducing a possibility of an excessively large volume of the battery module 1 caused by an excessive thickness of the cushion member 142.

In some embodiments, at least one of the first heat insulating member 13 and the second heat insulating member 141 is made of mica.

The first heat insulating member 13 and/or the second heat insulating member 141 may be formed by laminating mica sheets. Conventionally, aerogel may be used in the battery module for heat insulation. Compared with the aerogel, the mica has a lower use cost and is easier to be assembled with other components such as the cell 111.

The mica is used as a heat insulating material, which improves heat insulation performance of the entire battery module 1 and also reduces a manufacturing cost of the battery module 1.

Embodiments of the present disclosure further provide a battery pack, including: a housing (not shown in the figure) and at least one battery module 1. An accommodation space is formed in the housing, and the battery module 1 is located in the accommodation space. The battery module 1 is the battery module 1 described in any one of the above embodiments.

The battery module 1 is accommodated in the housing. The number of the battery module in in the battery pack may be one or more. By use of the above battery module 1, heat insulation performance of the battery pack is improved, and the operational reliability and stability of the battery pack are also improved.

Embodiments of the present disclosure provide a battery module 1 and a battery pack. The battery module 1 includes a cell assembly 11, a collection assembly 12, a first heat insulating member 13, and a heat insulation cushion assembly 14. The cell assembly 11 includes a plurality of cells 111 arranged along a length direction X of the battery module 1. The collection assembly 12 is located on a side of the cell assembly 11 along a height direction Z of the battery module 1, and is connected to the cell assembly 11. The first heat insulating member 13 is located on a side of the collection assembly 12 away from the cell assembly 11 along the height direction Z of the battery module 1, and is connected to the collection assembly 12. The heat insulation cushion assembly 14 is located between two adjacent cells 111. The heat insulation cushion assembly 14 includes a second heat insulating member 141 and two cushion members 142. The two cushion members 142 are located on two sides of the second heat insulating member 141 along the length direction X of the battery module 1, and each of the cushion members 142 has one side connected to the second heat insulating member 141 and the other side connected to the corresponding cell 111. With the above design, deformation of the expanded cells 111 is absorbed, damages to the cells 111 due to mutual extrusion between the cells 111 are reduced, heat insulation performance between the cells 111 is improved, and the heat transfer between the cells 111 is reduced. In addition, the electrolyte released by one thermal-runaway cell 111 is prevented from moving to other cells 111, thereby avoiding thermal runaway of the whole battery module due to thermal runaway of a single cell 111.

The above descriptions are only preferred embodiments of the present disclosure, and are not intended to limit the present disclosure. For those skilled in the art, various modifications and changes may be made to the present disclosure. Any modifications, equivalent replacements, improvements, and the like made within the principle of the present disclosure shall fall within the protection scope of the present disclosure.

## Claims

1. A battery module (1), comprising:
a cell assembly (11) comprising a plurality of cells (111) arranged along a length direction of the battery module (1);
a collection assembly (12), wherein the collection assembly (12) is located on a side of the cell assembly (11) along a height direction of the battery module (1), and is connected to the cell assembly (11); and
a first heat insulating member (13), wherein the first heat insulating member (13) is located on a side of the collection assembly (12) away from the cell assembly (11) along the height direction of the battery module (1), and is connected to the collection assembly (12),
wherein an end of each of the plurality of cells (111) adjacent to the collection assembly (12) is provided with an explosion-proof port (111a), the collection assembly (12) comprises a body portion (121), the body portion (121) is provided with a plurality of avoidance holes (121a) arranged along the length direction of the battery module (1), the plurality of avoidance holes (121a) are in one-to-one correspondence to the explosion-proof ports (111a) of the plurality of cells (111), and each of the avoidance holes (121a) is communicated with the explosion-proof port (111a) corresponding thereto; and
the first heat insulating member (13) comprises a plurality of grooves (131) arranged along the length direction of the battery module, and the plurality of grooves (131) penetrate along the height direction of the battery module and are in one-to-one correspondence to the plurality of avoidance holes (121a).

2. The battery module according to claim 1, wherein a dimension D1 of a bottom wall of each of the grooves (131) along the height direction of the battery module satisfies 0.1 mm≤D1≤0.2 mm, and a dimension D2 of the first heat insulating member (13) along the height direction of the battery module satisfies 0.4 mm≤D2≤1 mm.

3. The battery module according to claim 1 or 2, wherein the first heat insulating member (13) is made of mica.

4. The battery module according to any one of claim 1 to 3, wherein the first heat insulating member (13) is fixedly connected to the collection assembly (12) through a plurality of fasteners (15).

5. The battery module according to claim 1, further comprising:
a heat insulation cushion assembly (14) located between two adjacent cells of the plurality of cells (111), wherein the heat insulation cushion assembly (14) comprises a second heat insulating member (141) and two cushion members (142), wherein the two cushion members (142) are located on two sides of the second heat insulating member (141) along the length direction of the battery module (1), and each of the two cushion members (142) has a first side connected to the second heat insulating member (141) and a second side connected to one of the two adjacent cells (111).

6. The battery module according to claim 5, wherein each of the two cushion members (142) comprises two first body portions (142a) extending along the height direction of the battery module and two second body portions (142b) extending along a width direction of the battery module, and the two first body portions (142a) and the two second body portions (142b) are connected to form a frame structure.

7. The battery module according to claim 5 or 6, wherein each of the cushion members (142) is bonded to the second heat insulating member (141), and is bonded with the corresponding cell (111).

8. The battery module according to any one of claims 5 to 7, wherein a dimension D3 of the second heat insulating member (141) along the length direction of the battery module satisfies 0.5 mm≤D3≤1 mm.

9. The battery module according to any one of claims 5 to 8, wherein a dimension D4 of one of the cushion members (142) along the length direction of the battery module satisfies 0.5 mm≤D4≤1 mm.

10. The battery module according to any one of claims 5 to 9, wherein the second heat insulating member (141) is made of mica.

11. The battery module according to any one of claims 1 to 10, wherein the collection assembly (12) is a Cells Contact System assembly.

12. The battery module according to any one of claims 1 to 11, wherein the collection assembly (12) comprises aluminum bars (122), and the aluminum bars (122) are welded to poles of the plurality of cells (111) respectively.

13. The battery module according to any one of claims 1 to 12, wherein electrolyte of a thermal-runaway cell (111) of the plurality of cells flows through its explosion-proof port (111a) and the corresponding avoidance hole (121a) of the collection assembly (12), and then breaks through a bottom wall of the corresponding groove (131) of the first heat insulating member (13).

14. The battery module according to any one of claims 1 to 13, further comprising two end plates (112), wherein the plurality of cells (111) are electrically connected in series, and side surfaces of the plurality of cells (111) are fixed to one or more steel strips (113), and wherein the plurality of cells (111) are arranged between the two end plates (112), and each of the one or more steel strips (113) comprises two ends fixed to the two end plates respectively.

15. A battery pack, comprising:
a housing, wherein an accommodation space is formed in the housing; and
at least one battery module according to any one of claims 1 to 14, wherein the at least one battery module is located in the accommodation space.
